# EUROPÄISCHE PATENTSCHRIFT

(11) **EP 2 935 719 B1**
(45) Veröffentlichungstag und Bekanntmachung des Hinweises auf die Patenterteilung: **09.08.2017**
(21) Anmeldenummer: 13821671.8
(22) Anmeldetag: 02.12.2013
(51) Int. Cl.: E04C 5/12, E04H 12/16, E02D 27/42

(54) **ANKER, SPANNVORRICHTUNG, WINDENERGIEANLAGE UND VERFAHREN ZUM ZUGSPANNEN VON ZUGSTRÄNGEN AN EINEM ANKER**
ANCHOR, TENSIONING DEVICE, WIND TURBINE AND METHOD FOR PUTTING TENSILE ELEMENT STRANDS UNDER TENSILE STRESS ON AN ANCHOR
BOULON D'ANCRAGE, DISPOSITIF TENDEUR, ÉOLIENNE ET PROCÉDÉ POUR TENDRE DES ÉLÉMENTS DE TRACTION À UN BOULON D'ANCRAGE

(30) Priorität: 18.12.2012 DE 102012223616
(43) Veröffentlichungstag der Anmeldung: 28.10.2015
(73) Patentinhaber: Wobben Properties GmbH, 26607 Aurich (DE)
(72) Erfinder: STRACKE, Olaf, 26725 Emden (DE)
(74) Vertreter: Eisenführ Speiser
(86) Internationale Anmeldenummer: PCT/EP2013/075282
(87) Internationale Veröffentlichungsnummer: WO 2014/095330

(56) Entgegenhaltungen:
- EP-A2- 0 197 912
- DE-A1- 10 126 912

## Beschreibung

Die Erfindung betrifft einen Anker gemäß dem Oberbegriff des Anspruchs 1. Die Erfindung betrifft weiter eine Spannvorrichtung, eine Windenergieanlage und ein Verfahren zum Zugspannen von Zugsträngen an einem Anker.

Zum Versteifen von Spannbetonbauwerken, insbesondere im Bereich der Spannbetontürme, wie beispielsweise einem Turm einer Windenergieanlage, werden Spannlitzen verwendet, die durch Aufbringen einer Zugkraft eine Verspannung und Versteifung der Bauwerkstruktur bewirken; insbesondere bei einem aus einer Anzahl von Turmsegmenten zusammengesetzten Spannbetonturm einer Windenergieanlage können ein einzelnes Turmsegment oder ein erstes und ein zweites Turmsegment oder die Anzahl von Turmsegmenten für sich allein oder untereinander unter Zugspannung versetzt werden. Generell ist eine Spannvorrichtung ausgebildet für eine Anbringung an einem Bauwerk und zum Halten von Zugsträngen an einem Bauwerk wie beispielsweise dem Turm einer Windenergieanlage. Bei Windenergieanlagen wird die feste Verbindung zum Beispiel erreicht, indem Spann- oder Zuglitze oder eine Stange oder dergleichen allein oder gebündelt zu einem Zugstrang zusammengefasst werden und mit dem Fundament verankert werden; dazu dient regelmäßig ein hier als Spannanker bezeichneter Anker der Spannvorrichtung.

Der Spannanker steht über einen oder mehrere Zugstränge mit einem Festanker an einer anderen Stelle des Bauwerks in Verbindung und kann durch Aufbringen von Zugspannung zwischen dem Spannanker und dem Festanker die Zugspannung auf ein Bauteil oder zwischen den Bauteilen eines Bauwerks wie beispielsweise Turmsegmenten eines Turms erzeugen. Ein Spannanker unterscheidet sich von einem Festanker dadurch, dass der Spannanker Angriffsmittel zum Ansetzen eines Spannwerkzeugs bietet, insbesondere ist ein Spannanker ausgebildet, einen Zugstrang gegen den Spannanker zu bewegen, diesen so unter Zugspannung zu setzen. Ein Festanker hat dagegen keine Funktionsmittel zur Änderung oder Erhöhung einer Zugspannung eines Zugstrangs; vielmehr dient ein Festanker dazu, an geeigneter Stelle des Bauwerks in einem Beton oder an einem Betonbauteil festgesetzt zu werden, um einen oder mehrere Zugstränge am Festanker zu halten.

Die Verankerung der Spannvorrichtung bzw. der Zugstränge am Spannanker erfolgt vorzugsweise, indem die gespannten Spannlitzen beispielsweise mittels eines zuvor erläuterten Spannankers (auch Zuganker genannt) an beispielsweise einer Decke des Turmkellers befestigt werden. Diese Befestigung erfolgt typischerweise indem die Spannlitzen bei Arbeiten im Turmkeller durch eine entsprechende Öffnung in der Kellerdecke durchgeführt werden, von einer hydraulischen Stempelvorrichtung gespannt und sodann mittels eines Spannankers gegen die Decke befestigt werden.

Aus DE 100 31 683 A1 ist beispielsweise ein Spannbetonturm für eine Windenergieanlage mit einem Fundament, einem im wesentlichen aus Beton bestehenden Turm und mindestens einem seilartigen Spannstahlelement zum Verspannen des Turms bekannt. Dabei ist vorgesehen, dass das Spannstahlelement mittels an dem Turm angeordneter Spanntaschen fixiert ist.

EP 1 303 676 B1 offenbart einen Turm einer Windenergieanlage mit einer Vielzahl von aufeinander angeordneten Fertigteilsegmenten, welche mittels Spannelementen miteinander verspannt sind, wobei jedes Fertigteilsegment ein Ringelement aufweist. Um Spannlitze oder dergleichen Zugstränge an Stoßstellen der einzelnen Turmsegmente in verbesserter Weise zu führen, ist vorgesehen, dass ein Ringelement eine Führungsvorrichtung zum Führen einer Spannlitze an Übergängen zwischen Fertigteilsegmenten aufweist, wobei die Führungsvorrichtung an ihrem Ende einen rohrförmigen Abschnitt aufweist.

Generell ist in EP 0 949 389 B1 eine Verankerungsvorrichtung für Zugglieder mit einem Verankerungskörper, durch den das Zugglied geführt wird, beschrieben, die darüber hinaus zwei Ankerkeile aufweist, die um das Zugglied angeordnet werden und mit deren Hilfe das Zugglied im Verankerungskörper festgelegt wird. Dabei ist ein Schutzelement vorgesehen, das zwischen den Ankerkeilen und dem Zugglied angeordnet wird, so dass die Krafteintragung auf das Zugglied indirekt über das Schutzelement erfolgt. Die mit dem Schutzelement in Kontakt stehenden Oberflächen der Ankerteile und/oder die mit den Ankerteilen in Kontakt stehende Oberfläche des Schutzelements ist mit Ausnehmungen versehen.

Ein eingangs genanntes externes Spannglied bestehend aus einem Zugglied, das von einem flexiblen Rohr umhüllt ist, dessen Hohlräume nach dem Verspannen mit erhärtender Masse ausgefüllt werden, ist aus DE 198 58 001 bekannt. Darin ist ein als Endverankerung bezeichneter Festanker beschrieben, bei dem Zugelemente eines Spanngliedes mit Hilfe von als Keil gebildeten Befestigungselementen an einer Lochscheibe verankert sind. Die Zugelemente verlaufen innerhalb eines Verankerungsbereichs jeweils innerhalb eines Übergangsröhrchens, das an einem Ende ein Außengewinde aufweist, mit dem es in eine zugehörige Gewindebohrung in einer Zwischenplatte eingeschraubt ist. Am anderen Ende ist das Übergangsröhrchen jeweils fest in eine zugehörige Bohrung einer Dichtscheibe eingesteckt. Die Bohrung hat einen engen Bereich, der das dort hindurchgehende Zugelement eng umschließt. Im Abstand von der vorgenannten Dichtscheibe ist eine zweite Dichtscheibe mit engen Bohrungen angeordnet, wobei der lichte Abstand der beiden Dichtscheiben untereinander mindestens dem beabsichtigten Nachspannweg entspricht.

Diese Konstruktion ermöglicht die Ausbildung eines vergleichsweise verlässlichen Festankers, der zudem ein Zugelement vor Feuchtigkeit zu schützen in der Lage ist. Ein Anker dieser Art ist jedoch noch verbesserbar.

In DE 15 59 526 ist ein Befestigungselement für einen Anker als Ankerteil offenbart, das die Litzen berührt und mit Ausnehmungen versehen ist, die sich der Form und dem Verlauf der Litzendrähte anpasst.

Aus DE 92 06 827 ist eine Keilverankerung für Drähte oder Litzen bekannt geworden, mit mindestens einem im wesentlichen kegelstumpfförmigen aus Keilsegmenten bestehenden Keil zum Einsetzen in eine konische Bohrung eines Ankerkörpers.

Ein Nachteil bisheriger Ausführungen eines Ankers besteht darin, dass diese vergleichsweise aufwändig die Abdichtungsproblematik zu beseitigen suchen, was vergleichsweise sicher sein mag, jedoch einen hohen Bauraumbedarf erforderlich macht. Dieser entsteht aber insbesondere bei Industrietürmen nur mit Einschränkung zur Verfügung. Wünschenswert ist es, einen Anker und ein Verfahren zum Anbringen eines Ankers einfacher und dennoch sicher zu gestalten.

Das Deutsche Patent- und Markenamt hat in der Prioritätsanmeldung folgenden Stand der Technik recherchiert: DE 33 39 125 C2, DE 34 27 901 A1, DE 101 26 912 A1, DE 198 33 273 A1, US 4 405 114 A, US 5 469 677 A, EP 0 197 912 A2, EP 1 505 223 A1, EP 2 339 094 A1, WO 98/41709 A1.

An dieser Stelle setzt die Erfindung an, deren Aufgabe es ist, eine Vorrichtung und ein Verfahren anzugeben, das eine vereinfachte und gleichwohl vor widrigen Umständen geschützte Möglichkeit bietet, eine sichere Zugspannung an einem Bauwerk anzubringen. Insbesondere sollen die Vorrichtung und das Verfahren im Hinblick auf Turmbauten in verbesserter Weise ausgeführt sein. Insbesondere soll die Vorrichtung und das Verfahren vergleichsweise einfach und mit verringertem Bauraumbedarf gleichwohl eine langfristig und vor widrigen Umwelteinflüssen geschützte Zugspannungshaltung ermöglichen.

Betreffend die Vorrichtung wird die Aufgabe durch die Erfindung mit einer Vorrichtung des Anspruchs 1 gelöst.

Insbesondere ist vorgesehen, dass in allen weiteren Durchführungen der Anzahl von weiteren Durchführungen jeweils eine Sicherungshülse angeordnet ist.

Allgemein eignet sich außer einer Sicherungshülse jede Art eines Zugbefestigungselements, das ausgebildet ist den Zugstrang unter Zug selbsttätig zu verankern. Insbesondere soll der Zugstrang oder dergleichen Zugelement fest umgeben und dabei festgeklemmt werden.

Die Anwendung der Erfindung ist allgemein bei einem Bauwerk, insbesondere einem Turm mit Vorteil möglich. Die Anwendung ist jedoch nicht auf einen Turm beschränkt, insbesondere nicht auf einen Turm einer Windenergieanlage. Insbesondere die Anwendung auf Türme aus Spannbetonfertigteilen ist nicht auf einen Turm für eine Windenergieanlage beschränkt, sondern kann ganz allgemein zur Anwendung bei Industrietürmen dienen, wie beispielsweise einem Turm für einen Antennenträger für Telekommunikationseinrichtungen oder dergleichen.

Betreffend das Verfahren wird die Aufgabe durch die Erfindung mit einem Verfahren des Anspruchs 17 gelöst.

Die Erfindung geht von der Überlegung aus, dass sich ein Anker wie er als mehrteiliger Ankerkörper im Stand der Technik DE 198 58 001 A1 beschrieben ist, grundsätzlich bewährt hat, jedoch noch verbesserungswürdig ist. Die Erfindung hat erkannt, dass der Ankerkörper, insbesondere eines Ankerkopfes bei einem Festanker, in verbesserter Weise kompakter und gleichwohl sicher gegen widrige Einflüsse geschützt ausführbar ist, wenn Lochscheibe und Zwischenscheibe zum selbsttätigen verankern ausgebildet sind.

Dazu ist erfindungsgemäß vorgesehen, dass die Zwischenscheibe als Übergangsplatte ausgebildet ist, die in einer Durchführung eine Sicherungshülse oder dergleichen Zugbefestigungselement trägt, welches ausgebildet ist, den Zugstrang unter Zug selbsttätig zu verankern.

Als Zugstränge haben sich insbesondere Litze bewährt; vorzugsweise Monolitze. Beispielsweise können Litze aus verdrillten Drähten gebildet sein und ein PE-Mantel aufgenommen sein, der mit Korrosionsschutzmasse befüllt ist.

Es hat sich insbesondere als vorteilhaft erwiesen, dass wenigstens ein erster der Zugstränge mit einem unterscheidenden Erkennungsmerkmal versehen wird, das wenigstens den ersten Zugstrang unterscheidbar von einem zweiten Zugstrang kennzeichnet. insbesondere hat es sich als vorteilhaft erwiesen, dass alle Zugstränge mit einem voneinander unterscheidenden Erkennungsmerkmal versehen sind. Insbesondere ist ein Erkennungsmerkmal an einem Zugstrang im Bereich einer Ankerposition angebracht, vorzugsweise im Bereich einer Festankerposition und/oder im Bereich einer Spannankerposition. Beispielsweise kann ein Erkennungsmerkmal wenigstens in einem Bereich zwischen dem Ende des Zugstranges bis in einen Bereich einer Ankerposition und umfassend dieselbe angebracht sein. Das Erkennungsmerkmal kann sich aber auch über den gesamten Zugstrang erstrecken.

Ein Erkennungsmerkmal kann grundsätzlich jede erkennbare Markierung eines Zugstranges im zu verbauenden Zustand umfassen, die über eine bloße Identifizierung des Zugstranges aufgrund seiner individuellen Fertigungsmerkmale hinausgeht; insbesondere kann eine Markierung eine offensichtlich in Augenschein tretende Markierung sein. Diese und andere Abwandlungen können es dem Montagepersonal ermöglichen, wenigstens aber erleichtern, die Anzahl von Zugsträngen folgerichtig an einem Anker zu befestigen. Insbesondere hat sich eine farbliche Markierung des Zugstranges, vorzugsweise eine vollständige farbliche Einfärbung des Zugstranges, wenigstens in dem genannten Bereich, als vorteilhaft erwiesen.

Die Weiterbildung geht von der Überlegung aus, dass jeder einzelne Zugstrang, z. B. ein erster und ein zweiter Zugstrang, wenigstens in die Durchführung der Lochscheibe und/oder die weitere Durchführung der Übergangsplatte einzubringen ist. Die Weiterbildung geht auch von der Überlegung aus, dass jeder einzelne erste Zugstrang in seinem axialen Verlauf entlang des Bauwerks, d. h, zwischen Festanker und Spannanker, möglichst parallel zu einem zweiten Zugstrang verlaufen sollte; jedenfalls aber Überkreuzungen, Verdrehungen oder dergleichen zwischen den Zugsträngen zu vermeiden sind. Die Weiterbildung hat erkannt, dass dies besonders gut sicherzustellen ist, wenn die Zugstränge gut unterscheidbar sind, da dann ein Abweichen von einer parallelen Anordnung, jedenfalls aber Überkreuzungen, Verdrehungen oder dergleichen, leichter erkennbar sind.

Insbesondere wurde erkannt, dass eine folgerichtige Anordnung der Anzahl von Zugsträngen an einem Anker, d.h. bevorzugt in gleicher Folge am Festanker und Spannanker, diese Maßgabe gewährleisten kann. Es hat sich dazu als besonders vorteilhaft erwiesen, alle Zugstränge voneinander offensichtlich unterscheidbar zu gestalten, z. B. farblich unterschiedlich zu markieren und/oder einzufärben; wenigstens am Ende bis in den Bereich eines Festankers und/oder Spannankers.

Besonders vorteilhaft lässt sich über das Erkennungsmerkmal des Zugstranges eine Zuordnung zu einer Durchführung der Lochscheibe und/oder der weiteren Durchführung der Übergangsplatte und/oder einer weiteren Position am Anker angeben. Besonders vorteilhaft ist ein erstes Erkennungsmerkmal des ersten Zugstranges einem ersten Aufnahmemerkmal am Anker, insbesondere der Durchführung zugeordnet und ein zweites Erkennungsmerkmal des zweiten Zugstranges ist einem zweiten Aufnahmemerkmal am Anker, insbesondere der Durchführung, zugeordnet, wobei sich die Aufnahmemerkmale unterscheiden und die Erkennungsmerkmal unterscheiden und das erste Erkennungsmerkmal dem ersten Aufnahmemerkmal zugeordnet ist. Anders ausgedrückt ist bevorzugt, dass jeder Zugstrang eindeutig einer Durchführung zugeordnet werden kann, sodass ein Abweichen von einer parallelen Anordnung, jedenfalls aber Überkreuzungen, Verdrehungen oder dergleichen, von Zugsträngen besonders sicher vermeidbar ist.

Weitere vorteilhafte Weiterbildungen der Erfindung sind den Unteransprüche zu entnehmen und geben im Einzelnen vorteilhafte Möglichkeiten an, das erläuterte Konzept im Rahmen der Aufgabenstellung sowie hinsichtlich weiterer Vorteile zu realisieren.

Bevorzugt trägt die Lochscheibe in der Durchführung einen ringförmigen Ankerkörper, welche ausgebildet ist, einen Zugstrang an der Lochscheibe zu verankern. Damit bietet die Weiterbildung eine Verankerung des Zugstrangs sowohl in der Lochscheibe als auch in der Übergangsplatte. Eine Verankerung ist damit doppelt besonders zuverlässig und zum anderen führt die doppelte Verankerung des Zugstrangs insbesondere bei einer in einem befüllten PE-Mantel eingebrachten Litze zu guten Ergebnissen, was die Widerstandsfähigkeit gegen widrige Umwelteinflüsse anbetrifft.

Bevorzugt ist anderseits der Lochscheibe eine Sicherungsscheibe angeordnet. Diese ermöglicht eine vergleichsweise sichere Befestigung weiterer Teile des Ankerkopfs, nämlich insbesondere dient diese zum Anschluss einer Deckhaube und/oder Deckkappe. Die Sicherungsscheibe kann festgeschraubt werden, insbesondere mit manuell bedienbaren Schreiben wie einer Ringschraube oder dergleichen.

Einseits der Zwischenscheibe lässt sich der Ankerkopf insbesondere auf einen Setzring eines Fundaments aufsetzen. Der Ankerkopf ist unterseitig der Zwischenscheibe besonders bevorzugt auf die Passform eines Setzrings angepasst.

Die Sicherungsscheibe weist bevorzugt noch eine weitere Durchführung zur separaten Durchführung des Zugstranges auf. Im Rahmen der bevorzugten Weiterbildung ist ein Zugstrang durch eine Durchführung der Lochscheibe, eine weitere Durchführung der Übergangsplatte als auch die noch weitere Durchführung der Sicherungsscheibe geführt. Das Scheibensystem bietet eine besonders zuverlässige Verankerung und Führung des Zugstrangs. Insbesondere ist die Anzahl von Durchführungen in dem Scheibensystem kongruent zueinander ausgeführt.

Der Setzring weist bevorzugt einen der Anzahl von Zugsträngen gemeinsamen Innenbereich auf derart, dass die Anzahl von Zugsträngen gemeinsam durch den Innenbereich führbar sind. Insbesondere weist der Setzring eine Öffnung auf, die es erlaubt, die Anzahl der Zugstränge hindurchzuführen.

Der Ankerkopf weist bevorzugt eine anderseits der Lochscheibe angeordnete sowie diese übergreifende Abdeckung auf. Dadurch ist der Ankerkopf gegen Feuchtigkeit oder sonstige widrige Umwelteinflüsse geschützt. Insbesondere ist die Abdeckung derart ausgeführt, dass sie die Sicherungsscheibe und/oder die Lochscheibe und/oder die Zwischenscheibe übergreift. Der Ankerkopf kann in der Abdeckung nach der Art eines Gehäuses untergebracht werden. Ein besonders guter Schutz lässt sich erreichen durch Ausbilden einer Abdeckung als ein System aus einer Deckhaube und einer Deckkappe. Die Deckhaube bietet bevorzugt eine Schutzdecke für alle Teile des Ankerkopfs. Die Deckkappe weist bevorzugt einen Schutzstutzen für einen Zugstrang auf. Dadurch werden die Zugstrangköpfe im besonderen Maße gegen Eindringen von Feuchtigkeit geschützt. Das System bietet einen doppelten Schutz gegen widrige Umwelteinflüsse.

Die Anzahl der Durchführungen in den Scheiben ist bevorzugt zentrosymmetrisch um eine Achse des Ankers angeordnet; dadurch sind die Zugkräfte gleichmäßig um die Achse verteilt. Je nach Ausmaß der Zugkräfte lassen sich unterschiedliche Anzahlen von Durchführungen wählen und festlegen - beispielsweise durch Austausch der Scheiben. Eine Scheibe kann beispielsweise 3, 7, 9, 12 oder 16 zentrosymmetrisch angeordnete Durchführungen aufweisen. Das System der Scheiben ist bevorzugt so ausgeführt, dass sich diese, wenigstens die Lochscheibe und die Übergangsplatte selbstzentriert ineinander setzen lassen. Die Anzahl der Durchführungen sind bevorzugt in einem gegenüber einem Anschlagbereich abgesetzten Durchführungsbereich angeordnet. Beispielsweise kann der Anschlagbereich als ein zentrosymmetrischer Ringbereich und der Durchführungsbereich als ein zentrosymmetrischer Kreisbereich ausgebildet sein. Das System von Scheiben ist damit seitlich und axial selbstausgerichtet und die Durchführungen lassen sich ohne weitere Justierung zur Deckung bringen. Dies ermöglicht ein einfaches Durchführen des Zugstrangs durch die Durchführungen.

Eine Durchführung nimmt bevorzugt ein Zugbefestigungselement, insbesondere eine Sicherungshülse im Falle der Übergangsplatte oder einen Ankerkörper im Falle der Lochscheibe auf. Grundsätzlich kann ein Zugbefestigungselement oder ein Ankerkörper unterschiedliche Formen haben; besonders bevorzugt ist eine zylindrische oder eine ringförmige Form, da dadurch ein Zugstrang allseitig umschlossen werden kann. Bevorzugt weist ein ringförmiges Zugbefestigungselement und/oder Ankerkörper einen konischen und einen zylindrischen Abschnitt auf. Der zylindrische Abschnitt dient insbesondere einer sicheren axialen Einbringung. Der konische Abschnitt lässt sich je nach Ausmaß einer Zugkraft mehr oder weniger tief in eine Durchführung einziehen, so dass die Klemmkraft auf einen Zugstrang je nach Einbringungstiefe des konischen Abschnitts angemessen ist.

Eine Durchführung der Übergangsplatte und/oder Lochscheibe weist bevorzugt eine glatte oder strukturierte Innenmantelseite auf, um ein Zugbefestigungselement und/oder Ankerelement sicher zu halten.

Der Ankerkörper und/oder die Sicherungshülse ist besonders bevorzugt in Form eines Ringkeils gebildet. Ein Ringkeil weist bevorzugt einen oder mehrere Dehnungsschlitze auf; dies dient bevorzugt der sachgerechten Anpassung einer Klemmkraft auf einen Zugstrang.

Die Innenmantelseite eines Zugbefestigungselements und/oder das Ankerkörpers ist bevorzugt gezahnt oder mit Rippen versehen oder sonstigen Strukturelementen, die sich dazu eignen, in einen Zugstrang eingedrückt zu werden. Bevorzugt ist die Struktur in besonderer Weise gehärtet, um gegenüber einem PE-Mantel oder einer Korrosionsschutzmasse oder einem Stahlgeflecht eines Zugstrangs eine höhere Härte aufzuweisen. Beispielsweise können Rippen mit unterschiedlichem Abstand und Härte vorgesehen sein. Insbesondere können Zahnungen mit vergleichsweise spitzen Kanten vorgesehen sein.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in' der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und· beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:
Fig. 1 eine schematisierte Darstellung einer Windenergieanlage in einer bevorzugten Ausführungsform, wobei der Turm mit einer Anzahl von unter Zugspannung aneinandergesetzten Turmsegmenten gebildet ist;
Fig. 2 das Detail eines unteren Turmabschnitts eines Turms einer Windenergieanlage wie diese in Fig. 1 gezeigt ist unter Darstellung einer Spannvorrichtung mit einem Festanker und einem Zuganker sowie eine Anzahl von zwischen den Ankern gehaltenen Zugsträngen in einer vertikalen Querschnittansicht (A) und einer horizontalen Querschnittansicht (B);
Fig. 3 eine perspektivische Explosionsdarstellung eines Ankers im Rahmen einer besonders bevorzugten Ausführungsform als Festanker mit einem mehrteiligen Ankerkopf;
Fig. 4 in Ansicht (B) eine perspektivische Seitenansicht des Ankerkopfs der Fig. 3 und in Ansicht (A) eine detaillierte Querschnittansicht des Ankerkopfes;
Fig. 5 eine als Übergangsplatte gemäß dem Konzept der Erfindung ausgebildete Zwischenscheibe mit einer Anzahl von weiteren Durchführungen, wobei jede Durchführung zur separaten Durchführung eines Zugstranges in Form einer Litze dient, wobei die Ansichten (A), (B), (C) eine Querschnittansicht, eine Draufsicht und eine perspektivische Ansicht der Übergangsplatte sind;
Fig. 6 in Ansichten (A), (B), (C), (D), (E) das Detail eines Zugbefestigungselements in Form einer Sicherungshülse zum Einsatz in eine in Fig. 5 dargestellte Durchführung der Übergangsplatte, um einen Zugstrang in der Durchführung unter Zug selbsttätig zu verankern;
Fig. 7 das Detail eine Lochscheibe des in Fig. 3 und Fig. 4 gezeigten Ankerkopfes in Ansichten (A), (B), (C) als Querschnittansicht, als Draufsicht und eine Einzelheit eines Rasters der Anzahl von Durchführungen in der Lochscheibe;
Fig. 8 in Ansichten (A) bis (F) das Detail eines Ankerkörpers zum Einsatz in eine Durchführung der in Fig. 7 gezeigten Lochscheibe;
Fig. 9 ein Ablaufdiagramm eines Verfahrens zum Zugspannen von Zugsträngen an einem Festanker der Fig. 3.

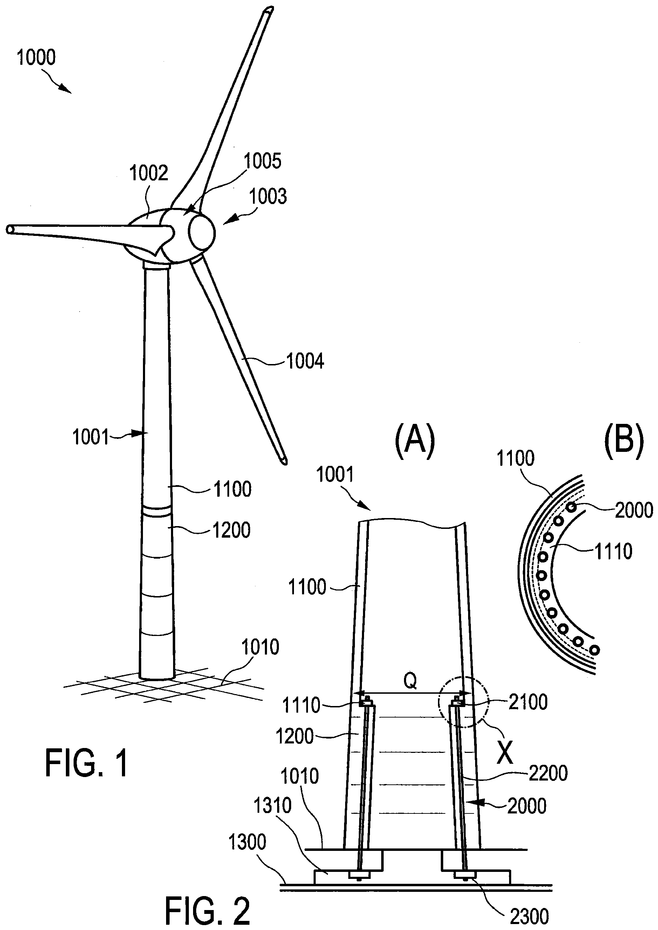

In den Fig. 1 bis Fig. 9 sind für gleiche oder ähnliche Teile oder Teile gleicher oder ähnlicher Funktion der Einfachheit halber gleiche Bezugszeichnen benutzt.

Fig. 1 zeigt eine Windenergieanlage 1000 mit einem Turm 1001 und einer auf dem Turm 1001 angebrachten Gondel 1002. Die Gondel 1002 trägt einen Rotor 1003 mit einer Anzahl von vorliegend drei Rotorblättern 1004. Ein Rotorblatt 1004 des Rotors 1003 ist über eine Nabe 1005 mit einer nicht näher dargestellten Welle in der Gondel 1002 verbunden. Dazu ist ein Rotorblatt 1004 über ein Blattlager an einem Nabenadapter angeschlossen und mit der Welle gekoppelt. Bei Wind angetriebenem, sich drehenden Rotor 1003 lässt sich über die Welle ein in der Gondel 1002 angeordneter Generator zur Stromerzeugung antreiben. Die vom Generator gelieferte elektrische Energie kann über elektrische Stromrichter, Transformatoren oder dergleichen weitere geeignete elektrische Einrichtung zur Einspeisung in ein nicht näher dargestelltes Stromnetz umgewandelt werden; die Einrichtungen können in der Gondel 1002 oder am Grund 1010, im Turm 1001 oder außerhalb des Turms 1001 der Windenergieanlage 1000 angeordnet sein.

Der Turm 1001 der Windenergieanlage 1000 ist über ein in Fig. 2 dargestelltes Fundament im Grund 1010 eingelassen. Der Turm 1001 der Windenergieanlage 1000 ist aus einer Anzahl von Turmsegmenten 1100 - beispielsweise als hohlzylindrische Stahl- oder Spannbetonsegment - aufgebaut. Ein zwischen Gondel 1002 und Grund 1010 angeordnetes, in Fig. 1 beispielhaft näher bezeichnetes Turmsegment 1100 eines oberen Turmbereichs hat einen unteren Halteansatz 1110 zur Aufnahme eines Festankers 2100. Darunter liegende, hier beispielhaft mit 1200 bezeichnete Turmsegmente können von einem Zugstrang 2200 durchsetzt werden, der sich erstreckt zwischen dem vorgenannten Festanker 2100 und einem Spannanker 2300 in einem Fundament, wie beispielsweise einem Kellerbauteil 1310 des Fundaments 1300 das am Turm festgemacht ist. Der Festanker 2100, der Zugstrang 2200 und der Spannanker 2300 sind Teil einer Spannvorrichtung 2000, von denen eine Anzahl entlang eines Umfangs des Turms in der beschriebenen Weise angeordnet sind. Ansicht (B) der Fig. 2 zeigt dazu einen Winkelabschnitt eines Querschnitts Q in Draufsicht auf den unteren Bereich des Turmsegments 1100; nämlich den Ansatz 1110 des Turmsegments 1100. Die Anzahl von Spannvorrichtungen 2000 sind erkennbar in vergleichbar kleinen Winkelabständen, um den Umfang des Turms 1001 verteilt und bringen jedenfalls für die unteren Turmsegmente 1100, 1200 und 1300 eine Zugspannung auf, welche durch die zwischen dem Festanker 2100 und Spannanker 2300 gespannten Zugstränge 2200 erreicht wird.

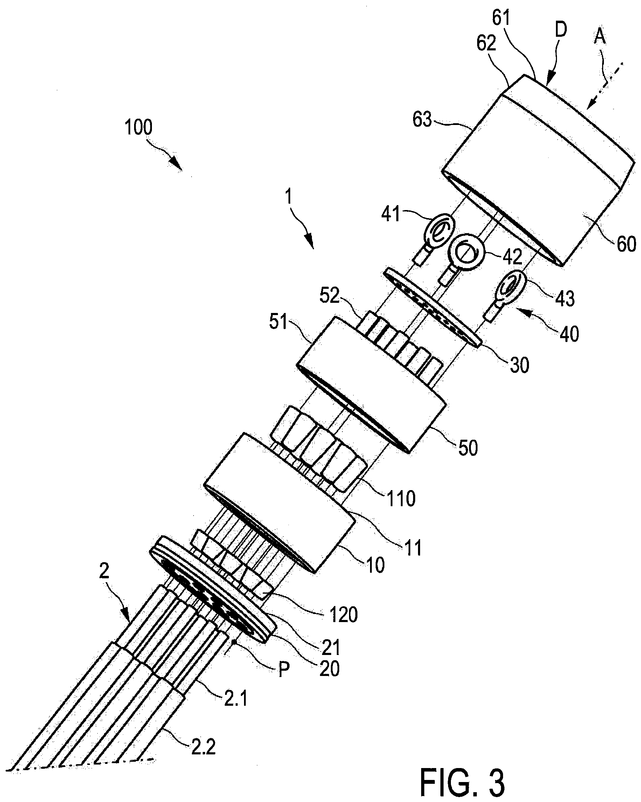

Fig. 3 zeigt einen als Festanker 2100 ausgebildeten Anker 100 in einer Explosionsdarstellung. Der Anker 100 weist einen mehrteiligen Ankerkopf 1 auf, welcher zur zugbelastbaren Aufnahme der hier als Monolitze gebildeten Zugstränge 2 dient. Ein Zugstrang 2 wird als verdrilltes Drahtgeflecht 2.1 gebildet, das in einen PE-Mantel 2.2 eingebracht und dort mit Korrosionsschutzmasse vergossen ist. Der Ankerkopf 1 weist eine Ankerplatte in Form einer Lochscheibe 10, eine als Übergangsplatte 20 ausgebildete Zwischenscheibe und eine Sicherungsscheibe 30 auf, die jeweils eine Durchführung zur separaten Durchführung eines Zugstranges 2 aufweisen, wobei die Durchführung eine von einer Anzahl von Durchführungen in der entsprechenden Scheibe ist.

Im vorliegenden Fall ist jeder einzelne Zugstrang 2 zur Bildung des Zugelements 2200, z. B. ein erster und ein zweiter Zugstrang, wenigstens in eine Durchführung 11 der Lochscheibe und eine weitere Durchführung 21 der Übergangsplatte eingebracht und jeder einzelne erste Zugstrang verläuft in seinem axialen Verlauf entlang des Turms 1001, d. h, zwischen Festanker 2100 und Spannanker 2300, möglichst parallel zu dem zweiten Zugstrang. Wenigstens ein erster der Zugstränge 2200 kann mit einem unterscheidenden Erkennungsmerkmal versehen sein, das wenigstens den ersten Zugstrang unterscheidbar von einem zweiten Zugstrang kennzeichnet. Dies kann, muss aber nicht, der Fall sein. Die Formulierungen unterseitig und oberseitig bzw. Unterseite und Oberseite, wie sie im Folgenden benutzt werden beziehen sich auf eine Achsrichtung A ausgehend von einem distalen Ende D des Ankerkopfs 1 zu einem proximalen Ende P des Ankerkopfes 1, d. h. so wie eine Spannvorrichtung 2200 mit einem oberseitig angebrachten Festanker 2100 und einem unterseitig der Spannvorrichtung angebrachten Spannanker 2300 im Turm 1001 der Windenergieanlage in Fig. 2 gezeigt ist.

Die als Übergangsplatte 20 ausgebildete Zwischenscheibe ist dementsprechend unterseitig der als Lochscheibe 10 ausgebildeten Ankerplatten angeordnet. Die Sicherungsscheibe ist dementsprechend oberseitig der Lochscheibe 10 angeordnet.

In einer Durchführung 11 der Lochscheibe sitzt ein ringförmiger Ankerkörper 110. Entsprechend ist eine Anzahl von ringförmigen Ankerkörpern 110 vorgesehen, von denen jeweils ein Ankerkörper 110 in jeweils einer Durchführung 11 der Lochscheibe sitzt. In der weiteren Durchführung 21 der als Übergangsplatte 20 ausgebildeten Zwischenscheibe sitzt ein Zugbefestigungselement, vorliegend in Form einer Sicherungshülse 120. Entsprechend ist eine Anzahl von Sicherungshülsen 120 vorgesehen, wobei jeweils eine Sicherungshülse 120 in jeweils einer Durchführung 21 der im Folgenden als Übergangsplatte 20 bezeichneten Zwischenscheibe sitzt.

Die Sicherungsscheibe 30 ist über einen Satz Ringschrauben 40 an der Lochscheibe 10 befestigt, wobei jeweils eine Ringschraube 41, 42, 43 eine Öffnung der Sicherungsscheibe 30 durchsetzt und in ein Gewindeloch der Lochscheibe 10 eingedreht wird. Zwischen der Sicherungsscheibe 30 und der Lochscheibe 10 ist so eine Deckkappe 50 festgemacht.

Die Deckkappe 50 weist einen zylindrischen Schutzmantel 51 sowie eine Anzahl von Schutzstutzen 52 auf. Jeder der Schutzstutzen 52 ist ausgebildet, ein oberseitiges Ende eines Zugstrangs 2 aufzunehmen und dicht zu übergreifen, d. h. ein Schutzstutzen 52 ist oberseitig geschlossen, so dass ein Eindringen von Feuchtigkeit in ein oberes Ende eines Zugstrangs 2 sicher unterbunden ist. Der Schutzmantel 51 der Schutzkappe 50 umgibt zudem seitlich die Lochscheibe 10 und die Zwischenscheibe 20.

Die Deckkappe 50 wiederum wird übergriffen von einer Deckhaube 60, welche eine Schutzdecke 61 sowie einen zunächst konisch angeformten seitlichen Mantelbereich 62 und einen zylindrischen Mantelbereich 63 aufweist, um sich insgesamt über die vorgenannten Bauteile des Ankerkopfs 1 zu setzen und somit den Ankerkopf 1 gegen Staub, Feuchtigkeit sowie das Eindringen anderer widriger Umwelteinflüsse zu schützen.

Dem Konzept der Erfindung folgend sind nicht nur die ringförmigen Ankerkörper 110 sondern zusätzlich auch die Sicherungshülsen 120 ausgebildet, den Zugstrang 2 unter Zug selbsttätig zu verankern, nämlich in der Lochscheibe 10 als auch in der Zwischenscheibe 20. Zum einen hat dies eine verbesserte Ankerwirkung zur Festverankerung eines Zugstrangs 2 zur Folge. Durch die vereinfachte und synergetisch zugfestsetzenden Maßnahme einer Sicherungshülse 120 in der Zwischenscheibe 20 führt dies auch dazu, dass sich ein Zugstrang 2 besonders fest in der Zwischenscheibe 20 festsetzt. Ein Eindringen von Feuchtigkeit in einen Bereich unterhalb der Übergangsplatte 20 wird somit besonders sicher unterbunden. Vorteilhaft wirkt hier auch das Zusammenspiel von Zugspannung und seitlicher Druckspannung beim Festziehen eines Zugstrangs 2 in der Durchführung 21 mittels der Sicherungshülse 120. Dieser Effekt wird um so stärker je plastischer der Außenbereich eines Zugstrangs 2 ausgebildet ist; hier wirkt der PE-Mantel und das eingebrachte Korrosionsschutzmittel zwischen PE-Mantel 2.2 und Litze 2.1 dichtend zusätzlich zur vorbeschriebenen Funktion.

Insgesamt bewirkt die Übergangsplatte 20 mit den Sicherungshülsen 120 unter Zug eine zusätzliche Sicherung des Zugstrangs 2 als auch eine verlässliche Abdichtung gegen Feuchtigkeit.

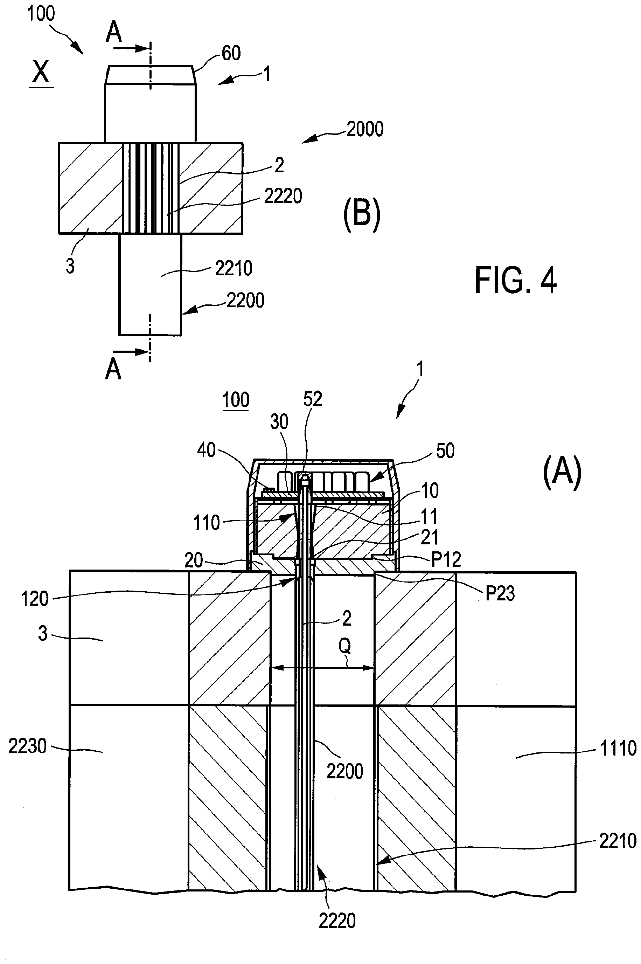

Im Folgenden wird der Aufbau eines Festankers und die Funktionsweise desselben in Bezug auf Fig. 4 weiter erläutert. Zunächst zeigt Fig. 4 in Ansicht (B) eine perspektivische Seitenansicht des Festankers 100 in assemblierter Form und in eingebrachtem Zustand; etwa gemäß dem Detail X der Fig. 2. zu sehen und entsprechend bezeichnet ist die Spannvorrichtung 2000 mit den in einem Schutzrohr 2210 eingebrachten Bündel 2220 von Zugsträngen der zuvor erläuterten Art, etwa eine Anzahl von Zugsträngen 2 der Fig. 3 zur Bildung eines Zugelements 2200 der Fig. 2. Vorliegend ist ein erster der Zugstränge 2200 mit einem unterscheidenden Erkennungsmerkmal versehen, das wenigstens den ersten Zugstrang unterscheidbar von einem zweiten Zugstrang kennzeichnet; auf diese Weise ist es dem Montagepersonal auf besonderes erleichterte Weise möglich, die Zugstränge folgerichtig in die Durchführung 11 der Lochscheibe und eine weitere Durchführung 21 der Übergangsplatte einzubringen, derart, dass diese möglichst parallel in ihrem axialen Verlauf entlang des Turms 1001, d. h, zwischen Festanker 2100 und Spannanker 2300, verlaufen, jedenfalls aber vollständig und überall in der gleichen Folge nebeneinander liegen. Insbesondere kann dazu ein hier nicht dargestelltes Erkennungsmerkmal an einem Zugstrang mit einem hier nicht dargestellten Aufnahmemerkmal an einer Durchführung 11 der Lochscheibe und/oder einer weiteren Durchführung 21 der Übergangsplatte in Übereinstimmung gemäß einer vorgegebenen Zuordnung gebracht werden; im einfachsten Fall kann dies eine übereinstimmende erste Folge von Farbmarkierungen an den Zugsträngen in Festanker und Spannanker sein. Insbesondere kann dies auch in noch weiter ausgebildeter Weise eine Übereinstimmung mit einer Folge von Farbmarkierungen an den Durchführungen 11 der Lochscheibe und den weiteren Durchführungen 21 der Übergangsplatte oder einer sonstigen Stelle eines Ankers 100 sein.

Der Ankerkopf 1 ist wie zuvor beschrieben unter der geschlossenen Deckhaube 60 mit seinen Teilen untergebracht und hält die Zugstränge 2 bei Aufbringen einer Zugspannung fest.

Ansicht (A) der Fig. 4 zeigt eine Querschnittansicht des Ankerkopfs 1 am Ansatz 1110 des Turmsegments 1100 beispielsweise. Das so gebildete Fundament 2230 trägt einen Setzring 3, auf dem der Ankerkopf 1 aufliegt. Der Setzring ist zur stabilisierten, definierten Einlage des Ankerkopfs 1 als Stahlring ausgebildet und ist in geeigneter Weise im Fundament 2230 eingelassen, beispielsweise festbetoniert oder dergleichen. Die lichte Öffnung O des Rohres 2210 im Fundament 2230 ist ausreichend bemessen, um die Anzahl von Zugsträngen aufzunehmen. Betreffend den Ankerkopf 1 wird im Folgenden auf die vorstehende Beschreibung verwiesen, wobei in Fig. 4 für gleiche oder ähnliche Teile bzw. Teile gleicher oder ähnlicher Funktion gleiche Bezugszeichen benutzt sind. Insbesondere sind vorliegend die ineinander bzw. aufeinander gesetzten Scheiben, nämlich die Zwischenscheibe in Form der Übergangsplatte 20, die Ankerplatte in Form der Lochscheibe 10 und die darauf aufgebrachte Sicherungsscheibe 30 zu erkennen, wobei die Lochscheibe 10 gegen die Übergangsplatte 20 mit einem zentrosymmetrischen Ansatzprofil P12 auch seitlich festgesetzt, insbesondere zentriert festgesetzt ist. Das zentrosymmetrische Profil P12 weist dazu einen inneren kreisförmigen zentrischen Bereich und einen äußeren ringförmigen Bereich auf. Ebenso ist zwischen Stahlring 3 und Zwischenscheibe ein weiteres zentrosymmetrisches Profil P23 gebildet, das ebenfalls einen zentrierten Einsatz der Übergangsplatte 20 in den Stahlring, d. h. den Setzring 3 erlaubt. Die Sicherungsscheibe 30 ist vorliegend über eine Schraubverbindung, etwa den Satz Schrauben 40 auf der Lochscheibe 10 gehalten und klemmt dabei die Deckkappe 50 auf ein distales Ende D der Zugstränge 2, von denen einer in Fig. 4 Ansicht (A) beispielhaft gezeigt ist, wie er in einen Schutzstutzen 52 der Deckkappe 50 eingreift.

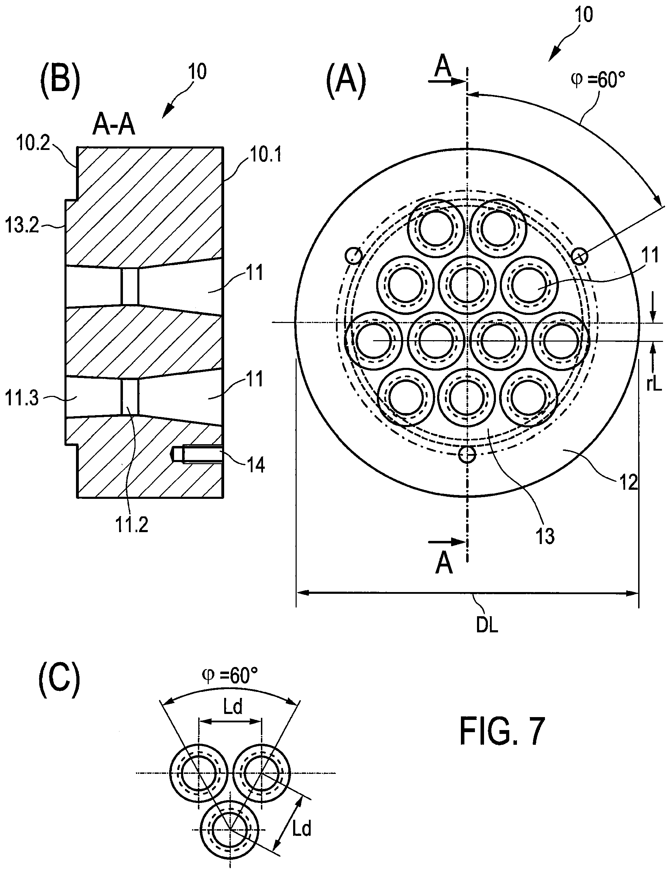

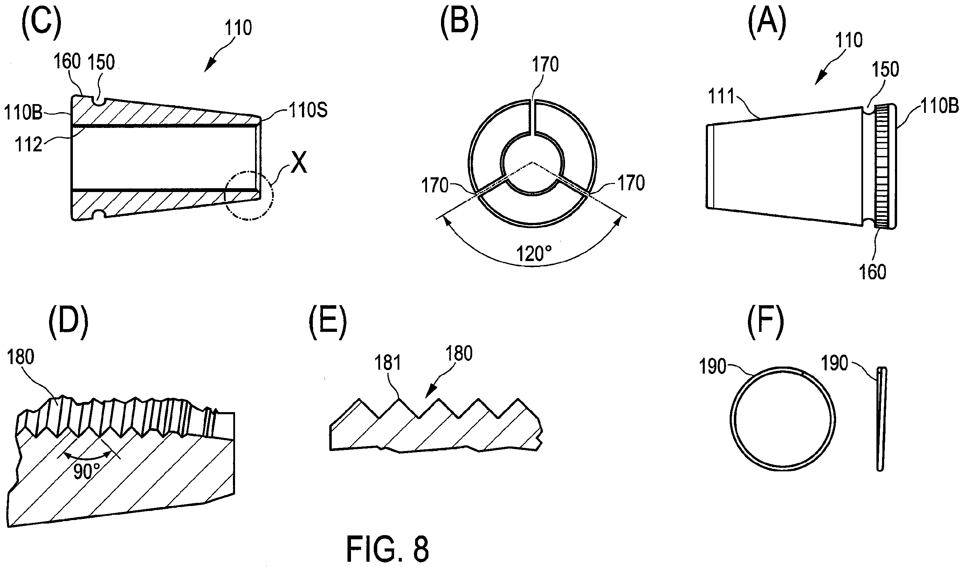

Der Zugstrang 2 ist - wie zuvor grundsätzlich erläutert - zum einen unter Zug mittels eines ringförmigen Ankerkörpers 110 in der Lochscheibe 10 festgesetzt, der als Litzenkeil weiter in Fig. 8 beschrieben ist, wobei die Lochscheibe 10 im Detail in Fig. 7 gezeigt ist.

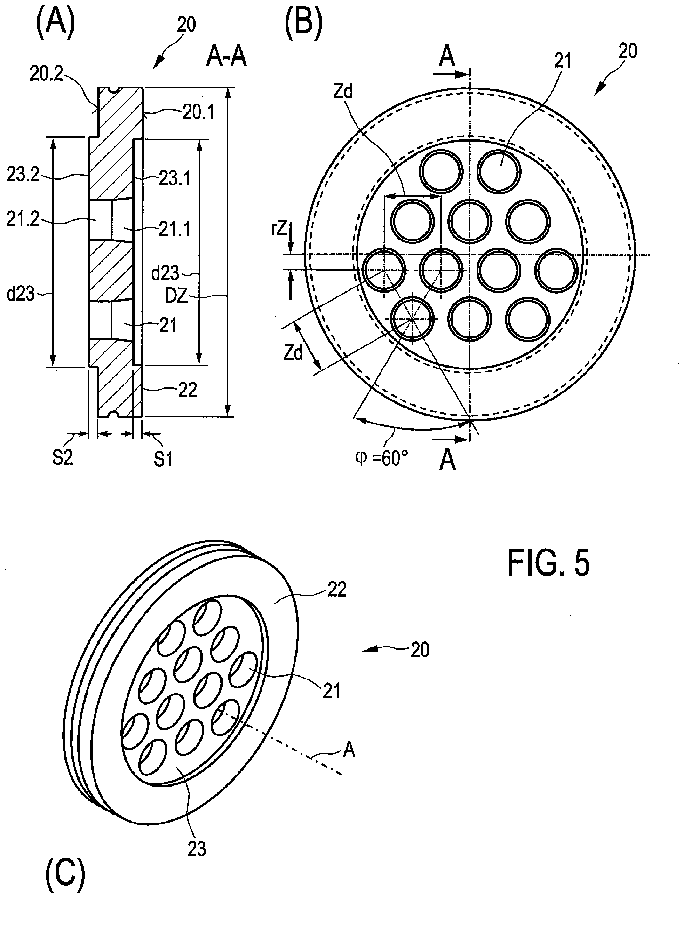

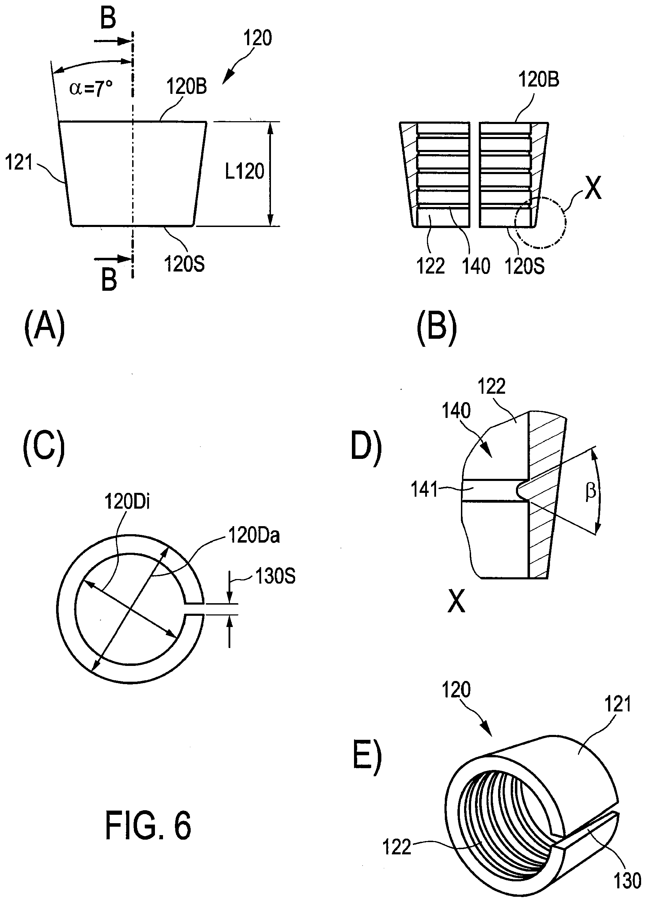

Der Zugstrang 2 ist mittels einer in der Übergangsplatte 20 eingesetzten Sicherungshülse 120 festgemacht. Ebenso wie der ringförmige Ankerkörper 110 ist auch die Sicherungshülse 120 ausgebildet, einen Zugstrang 2 unter Zug zu verankern; im Ergebnis ist der Zugstrang 2 so in der Lochscheibe 10 als auch in der Übergangsplatte 20 verankert. Die Übergangsplatte 20 ist weiter im Detail in Fig. 5 und die Sicherungshülse ist im Detail in Fig. 6 beschrieben.

Zunächst Bezug nehmen auf Fig. 5 zeigt diese in Ansicht (C) die Übergangsplatte 20 in perspektivischer Ansicht; im Folgenden wird bei der Beschreibung auch auf die Draufsicht der Ansicht (B) und die Querschnittansicht (A) Bezug genommen.

Die als Übergangsplatte 20 ausgebildete Zwischenscheibe ist vorliegend ausgebildet, in einer Durchführung 21 einer Anzahl von Durchführungen, eine Sicherungshülse 120 zu tragen, welche ausgebildet, den Zugstrang 2 unter Zug selbsttätig zu verankern. Die Übergangsplatte 20 weist dazu zunächst vorliegend eine Anzahl von zwölf Durchführungen 21 in einer zentrosymmetrischen und in einer an Dreiecksform orientierten Geometrie um die Achse A. Die Durchführungen 21 sind dazu im wesentlichen um einen Abstand Zd gleich beabstandet und an den Eckpunkten eines gleichwinkligen und gleichschenkligen Dreiecks, d. h. entlang Achsen unter einem Winkel von ϕ=60° zueinander angeordnet. Andere Anordnungen sind ebenfalls möglich, beispielsweise eine Anordnung auch von 3, 7, 9, 12, 15 oder 16 zentrosymmetrischen Durchführungen 21.

Bereits mit Bezug auf Fig. 7 ist ein gleiches Raster in Ansicht (C) und Ansicht (B) der Fig. 7 für die Lochscheibe 10 gezeigt. Der in Ansicht (C) der Fig. 7 gezeigten Einzelheit des Rasters ist ein Abstand Ld von Durchführungen zu entnehmen, der dem Abstand Zd entspricht. Auch ist der Winkel ϕ=60° der gleiche. Die Anordnung der Durchführungen 21 in der Zwischenscheibe 20 und die Anordnung der Durchführungen 11 in der Lochscheibe 10 ist deckungsgleich. Ebenso ist ein Durchmesser DI der Lochscheibe 10 gleich einem Durchmesser Dz der Zwischenscheibe. Auch die Radien rz und rl der Durchführungen 21, 11 sind identisch, vorgenanntes gilt auch in Bezug auf die Sicherungsscheibe 30.

Wie aus Fig. 5 weiter ersichtlich, ist die Anzahl der Durchführungen 21 ebenso wie auch die Durchführungen 11 in einem gegenüber einem Anschlagbereich 22 abgesetzten Durchführungsbereich 23 angeordnet. Entsprechend ist die Anzahl von Durchführungen 11 in einem gegenüber einem Anschlagbereich 12 abgesetzten Durchführungsbereich 13 angeordnet. Der Anschlagbereich ist vorliegend als ein zentrosymmetrischer Ringbereich gebildet. Der abgesetzte Durchführungsbereich 13 ist als ein um die Achse A angeordneter kreisförmiger Bereich gebildet.

Wie konkret aus Fig. 5 Ansicht (A) entnehmbar ist, wird der abgesetzte Durchführungsbereich 23, der Übergangsplatte 20 durch einen zentrosymmetrischen auf einer Oberseite 20.1 abgesenkten Senkbereich 23.1 und einen zentrosymmetrisch auf einer Unterseite 20.2 erhabenen Einsatzbereich 23.2 gebildet; diese jeweils mit gleichem Durchmesser d23, welcher zugleich der Innendurchmesser des Anschlagbereichs 22 ist. Ein Senkabstand S1, S2 ist vorliegend identisch und außerdem entspricht ein Senkabstand S1 des Senkbereichs in etwa einem Einzugsmaß einer Sicherungshülse 120. Das Einzugsmaß entspricht in etwa demjenigen Abstand S1 zwischen einer zugfreien und einer zugbelasteten Position der Sicherungshülse. Anders ausgedrückt können die Sicherungshülsen 120 in eine Durchführung 21 mit leichtem Überstand in S1 im Senkbereich 23 eingebracht werden. Wie aus Fig. 5 Ansicht (A) weiter ersichtlich, ist eine Durchführung 21 mit einem oberen, sich nach oben konisch öffnenden Durchführungsabschnitt 21.1 und einem unteren zylindrischen Durchführungsabschnitt 21.2 gebildet.

Wie aus Fig. 6 und der dort beschriebenen Sicherungshülse 120 ersichtlich ist, weist diese außen eine in etwa konische Form auf, so dass sie sich im zylindrischen Durchführungsbereich 21.2 der Durchführung festsetzen kann unter Vergrößerung der Druckspannung auf einen Zugstrang 2, nachdem die Sicherungshülse 120 zunächst in dem konischen Durchführungsbereich 21.1 einzusetzen ist.

Ansicht (E) der Fig. 6 zeigt dazu die Sicherungshülse 120 als Ringkeil mit einem einzigen sich entlang der Hülsenlänge L120 durchgehend erstreckenden Klemmschlitz 130. Die in Ansicht (A) der Fig. 6 gezeigte Kontur der Sicherungshülse 120 weist eine leicht konische Ausführung der Außenmantelseite 121 der Sicherungshülse 120 auf, dies mit einem konischen Winkel α von vorliegend etwa 7°. Die in Ansicht (E) und entlang des Schnitts B-B der Ansicht (B) der Fig. 6 ersichtliche Innenseite 122 der Sicherungshülse 120 ist strukturiert mit einer Rippenanordnung 140. Eine Rippe 141 der Rippenanordnung 140 auf der Innenseite 122 der Sicherungshülse 120 ist in Ansicht (D) der Fig. 6 gezeigt. Eine Rippe 141 hat einen in etwa dreiecksförmigen Querschnitt mit gerundeter Spitze, wobei die Schenkel des Dreiecks einen Rippenwinkel von β=60° bilden.

Der Abstand der Rippen 141 in der Rippenanordnung 140 ist wie aus Ansicht (B) der Fig. 6 ersichtlich ist in etwa gleich. Sowohl die symmetrische Ausrichtung einer Rippenflanke gemäß Winkel β als auch die Gleichbeabstandung einer Rippe bei der Rippenanordnung 140 ist vorliegend beispielhaft zur Erläuterung gezeigt. Beispielsweise können in einer Abwandlung die Rippenabstände in einer Rippenanordnung variieren, beispielsweise von einer Schmalkante 120S zu einer Breitkante 120B der Sicherungshülse zu- oder abnehmen. Auch kann eine Ausrichtung der Rippe 141 in Richtung aller gegen die Richtung der Breitkante 120B vorgesehen sein. Solche oder ähnliche Maßnahmen können dazu dienen, eine Verkantung einer Rippe 141 bzw. der Rippenanordnung 140 an einem Zugstrang, insbesondere einem PE-Mantel mit unterlegter Korrosionsschutzmasse und Stahlverdrillung, zu unterstützen.

Das Spaltmaß 130S des Klemmschlitzes 130 beträgt vorliegend in etwa der Breite einer Rippe bzw. liegt im Bereich eines Zehntels des Durchmessers 120D der Sicherungshülse, bevorzugt zwischen 5 und 15 % eines mittleren Durchmessers oder eines Innendurchmessers 120Di, bevorzugt unterhalb von 10 % eines Außendurchmesser 120Da.

Fig. 7 zeigt in Ansicht (A) weiter die Ausführung eines gegenüber einem Anschlagbereich 12 abgesetzten Durchführungsbereich 13. Der Durchführungsbereich 13 der Lochscheibe 10 beschränkt sich auf einen erhabenen Einsatzbereich 13.2 auf der Unterseite 10.2 der Lochscheibe 10. Auf der Oberseite 10.1 der Lochscheibe 10 ist die Lochscheibe im wesentlichen planar ausgeführt. Die Oberseite 10.1 trägt Gewindeöffnungen 14 für die in Fig. 3 gezeigten Ringschrauben 41, 42, 43.

Eine Durchführung 11 der Lochscheibe 10 weist einen ersten, sich konisch verjüngenden Abschnitt 11.1, einen zweiten in etwa zylindrischen mittleren Bereich 11.2 und einen sich konisch aufweitenden Bereich 11.3 auf. Die Konizität des ersten Durchführungsbereichs 11.1 ist größer als die Konizität des dritten Durchführungsbereich 11.3.

Aufgrund des Senkbereichs 23.1 der Übergangsplatte 20 eignet sich diese zur passgenauen zentrierenden Aufnahme eines Durchführungsbereichs 13 der Lochscheibe 10, nämlich des Einsatzbereichs 13.2 derselben. Der Einsatzbereich 23.2 der Übergangsplatte wiederum ist passgenau auf einen Einsatzbereich eines Setzringes 3 angepasst, so dass die Lochscheibe 10 in die Übergangsplatte 20 und die Übergangsplatte 20 zentriert in den Setzring 3 eingesetzt werden können. Dabei kommt ein unterer Anschlagbereich 20.2 zum Anschlag am Setzring. Ein oberer Anschlagbereich 20.1 der Übergangsplatte 20 kommt zum Anschlag am unteren Anschlagbereich 10.2 der Lochscheibe 10.

Die plane Oberfläche 10.1 der Lochscheibe wiederum dient zur flächigen Anlage der Deckkappe 50 bzw. darüber der Sicherungsscheibe 30 wie zuvor beschrieben.

Der zum Einsatz in eine Durchführung 11 der Lochscheibe 10 formangepasste ringförmige Ankerkörper 110 ist in Fig. 8 gezeigt. Der Ankerkörper 110 hat eine durchgängig konische Außenmantelfläche 111, die an einem breite Ende 110B zunächst eine Ringnut und des Weiteren einen geränderten Ringabschnitt 160 trägt. Die Sicherungshülse 120 als auch das Ankerelement 110 sind aus einem elastomeren Material mit erhöhter Kernhärte und etwas weicherer Oberflächenhärte gebildet.

Die Mantelfläche 111 trägt umfänglich in 120°-Abschnitten verteilte Dehnnuten 170, deren Spaltmaß deutlich unter dem des Spaltmaßes 130S der Sicherungshülse 120 liegt.

Eine Innenseite 112 des ringförmigen Ankerkörpers weist eine Zahnung 180 auf, wobei die Zahnspitzen eines Zahns 181 scharfkantig sind. Insbesondere ist die Zahnung 180 nochmals im Vergleich zur Kernhärte gehärtet.

Ansicht (F) der Fig. 8 zeigt in einer Draufsicht F1 und einer Seitenansicht F2 einen Federring 190, wie er in die Federnut 150 eingelegt werden kann.

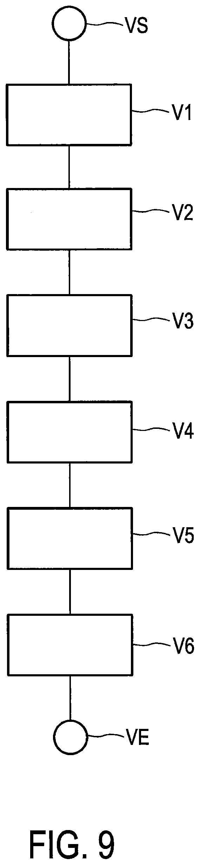

Ein Ablaufdiagramm der Fig. 9 zeigt exemplarisch einen möglichen Ablauf eines Verfahrens zur Zugspannung von Zugsträngen an einem Festanker 100 der Fig. 3 und Fig. 4. Nach Start VS des Verfahrens erfolgt in einem ersten Schritt V1 das Einbringen eines Zugstrangs wenigstens in die Durchführung des Lochscheibe und die weitere Durchführung der Übergangsplatte. In einem weiteren Verfahrensschritt V2 wird der Zugstrang unter Zug gestellt. In einem weiteren Verfahrensschritt V3 erfolgt das selbsttätige Verankern des Zugstrangs in der Lochscheibe 10 bzw. im Verfahrensschritt V4 das Verankern des Zugstrangs 2 in der Übergangsplatte 20. Nach Aufbringen der Abdeckungselemente in einem Verfahrensschritt V5 und Befüllen derselben in einem Verfahrensschritt V6 mit Korrosionsschutzmasse ist das Verfahren im wesentlichen im Schritt VE zunächst beendet.

## Patentansprüche

1. Anker (100), insbesondere Festanker (2100), für eine zur Anbringung an einem Bauwerk ausgebildete Spannvorrichtung (2000) zum Halten von Zugsträngen (2), wie Litze, Stangen, insbesondere Zuglitze, Zugstangen, oder dergleichen an dem Anker (100), mit einem mehrteiligen Ankerkopf (1), wobei der Ankerkopf (1) aufweist:
- eine Ankerplatte in Form einer Lochscheibe (10) mit einer Durchführung (11) zur separaten Durchführung eines Zugstranges (2), wobei die Durchführung (11) eine von einer Anzahl von Durchführungen (11) ist und der Zugstrang (2) einer von einer Anzahl von Zugsträngen ist,
- eine einseits der Lochscheibe (10) angeordnete Zwischenscheibe (20) mit einer
weiteren Durchführung zur separaten Durchführung des Zugstranges (2), wobei die weitere Durchführung eine von einer Anzahl von weiteren Durchführungen in der Zwischenscheibe ist und der Zugstrang (2) der eine von der Anzahl von Zugsträngen ist, wobei
- die Zwischenscheibe als Übergangsplatte (20) ausgebildet ist, die wenigstens in der weiteren Durchführung (21) ein Zugbefestigungselement trägt, welches ausgebildet ist, den Zugstrang (2) unter Zug selbsttätig zu verankern,
**dadurch gekennzeichnet, dass** der Ankerkopf (1) weiter aufweist:
- eine anderseits der Lochscheibe (10) angeordnete Sicherungsscheibe (30), wobei die Sicherungsscheibe (30) noch eine weitere Durchführung zur separaten Durchführung des Zugstranges (2) aufweist, wobei die noch weitere Durchführung eine von einer Anzahl von noch weiteren Durchführungen in der Sicherungsscheibe (30) ist und der Zugstrang (2) der eine von der Anzahl von Zugsträngen ist.

2. Anker (100) nach Anspruch 1 **dadurch gekennzeichnet, dass** die Lochscheibe (10) in der Durchführung (11) einen ringförmigen Ankerkörper (110) trägt, welcher ausgebildet ist, einen Zugstrang (2) an der Lochscheibe (10) zu verankern.

3. Anker (100) nach einem der vorhergehenden Ansprüche **dadurch gekennzeichnet, dass** der Ankerkopf (1) weiter aufweist:
einen einseits der Zwischenscheibe (20) angeordneten Setzring (3).

4. Anker (100) nach Anspruch 3 **dadurch gekennzeichnet, dass** der Setzring (3) einen Anschlag für die Zwischenscheibe (20) aufweist und/oder zur Einbettung in ein Fundament (1300) ausgebildet ist, und/oder einen der Anzahl von Zugsträngen (2) gemeinsamen Innenbereich derart aufweist, dass die Anzahl von Zugstränge gemeinsam durch den Innenbereich führbar sind.

5. Anker (100) nach einem der vorhergehenden Ansprüche **dadurch gekennzeichnet, dass** der Ankerkopf (1) weiter aufweist:
eine anderseits der Lochscheibe (10) angeordnete sowie diese übergreifende Abdeckung wobei eine Abdeckung die Sicherungsscheibe (30) und/oder die Lochscheibe (10) und/oder die Zwischenscheibe (20) übergreift.

6. Anker (100) nach Anspruch 5 **dadurch gekennzeichnet, dass** die Abdeckung als ein System aus einer anderseitig geschlossenen Deckhaube (60) und Deckkappe (50) gebildet ist, wobei die Deckhaube (60) eine Schutzdecke (61) für alle und die Deckkappe (50) einen Schutzstutzen (52) für einen Zugstrang (2) hat.

7. Anker (100) nach einem der vorhergehenden Ansprüche **dadurch gekennzeichnet, dass** die Anzahl der Durchführungen (11) und/oder der weiteren Durchführungen (21) und/oder der noch weiteren Durchführungen in einem gegenüber einem Anschlagbereich (12) abgesetzten Durchführungsbereich (13) zentrosymmetrisch um eine Achse der Zwischenscheibe (20) und/oder Lochscheibe (10) und/oder Sicherungsscheibe (30) angeordnet ist, wobei der Anschlagbereich (12) ein zentrosymmetrischer Ringbereich ist.

8. Anker (100) nach Anspruch 7 **dadurch gekennzeichnet, dass** der abgesetzte Durchführungsbereich (23) der Übergangsplatte (20) einen zentrosymmetrisch auf einer Oberseite abgesenkten Senkbereich (23) und einen zentrosymmetrisch auf einer Unterseite erhabenen Einsatzbereich aufweist.

9. Anker (100) nach einem der Ansprüche 1 bis 8 **dadurch gekennzeichnet, dass**
- der Senkbereich (23) der Übergangsplatte (20) zur Aufnahme eines Durchführungsbereiches (13) der Lochscheibe (10) ausgebildet ist und
- der Einsatzbereich der Übergangsplatte (20) zum Einsatz in einen Setzring (3) ausgebildet ist und ein einseits angeordneter Anschlagbereich (12) zum Anschlag an dem Setzring (3) und
- ein anderseits angeordneter Anschlagbereich (22) der Übergangsplatte (20) zum Anschlag an der Lochscheibe (10) ausgebildet ist.

10. Anker (100) nach einem der vorhergehenden Ansprüche **dadurch gekennzeichnet, dass** ein Senkabstand des Senkbereich (23) in etwa einem Einzugsmaß der Sicherungshülse (120) entspricht, wobei das Einzugsmaß den Abstand zwischen einer zugfreien und einer zugbelasten Position der Sicherungshülse (120) entspricht.

11. Anker (100) nach einem der vorhergehenden Ansprüche **dadurch gekennzeichnet, dass** eine Durchführung (21) der Übergangsplatte (20)
- eine glatte oder strukturierte Innenmantelseite aufweist, die gewindefrei ist, und/oder
- einen ersten konische Abschnitt und/oder einen zweiten zylindrischen Abschnitt der Innenmantelseite der Durchführung (21) hat.

12. Anker (100) nach einem der vorhergehenden Ansprüche **dadurch gekennzeichnet, dass** das Zugbefestigungselement als ein ringförmiger Ankerkörper (110) und/oder eine Sicherungshülse (120) in Form eines Ringkeils gebildet ist, wobei
- der Ankerkörper (110) eine Anzahl von Dehnungsschlitzen aufweist und/oder eine Mehrzahl von symmetrisch angeordneten Dehnungsschlitzen, und/oder
- die Sicherungshülse (120) einen Klemmschlitz (130) aufweist und/oder einen einzigen entlang der Hülsenlänge sich durchgehend erstreckenden Klemmschlitz (130), und/oder
- die Sicherungshülse (120) und/oder der Ankerkörper (110) eine konische Au-ßenmantelseite (121) hat.

13. Anker (100) nach einem der vorhergehenden Ansprüche **dadurch gekennzeichnet, dass** die Sicherungshülse (120) und/oder der Ankerkörper (110) eine zylindrische gezahnte Innenmantelseite hat.

14. Anker (100) nach Anspruch 13 **dadurch gekennzeichnet, dass** eine Zahnung (180) einer Innenmantelseite asymmetrisch zu einer ersten Seite oder oberen Seite, des Ankers (100) gerichtet ist.

15. Die Kombination von einer Spannvorrichtung (2000) und einem Anker (100) nach einem der Ansprüche 1 bis 14, wobei die Spannvorrichtung (2000) ausgebildet ist zur Anbringung an einem Bauwerk und zum Halten von Zugsträngen (2200), wie Zuglitze, Zugstangen oder dergleichen an dem Anker (100) mit einem Festanker (2100) und einem Spannanker (2300), wobei Zugstränge (2200), wie Zuglitze, Zugstangen oder dergleichen zwischen dem Festanker (2100) und dem Spannanker (2300) gehalten sind, wobei jeder der Anker (100) einen mehrteiligen Ankerkopf (1) aufweist, wobei der Ankerkopf (1) des Festankers (2100) zum Fixieren der Zugstränge (2200) vor und nach einem Spannen und der Ankerkopf (1) des Spannankers (2300) zum Spannen und anschließenden Fixieren der Zugstränge (2200) ausgebildet ist.

16. Windenergieanlage (1000) mit einer Gondel (1002) an der ein windantreibbarer Rotor (1003) über eine Rotornabe (1005) an einen Generator antriebsgekoppelt ist, wobei die Gondel (1002) auf einem Turm (1001) mit einer Anzahl von Turmsegmenten (1100, 1200, 1300) sitzt von denen wenigstens eines einen Anker (100) nach einem der vorhergehenden Ansprüchen aufweist, wobei wenigstens zwei oder alle Turmsegmente (1100, 1200, 1300) des Turms (1001), unter Zugspannung aneinander gehalten sind.

17. Verfahren zum Zugspannen von Zugsträngen (2) an einem Anker (100) nach einem der Ansprüche 1 bis 14, insbesondere Festanker (2100), für eine zur Anbringung an einem Bauwerk ausgebildete Spannvorrichtung (2000) zum Halten von Zugsträngen (2200), wie Litze, Stangen, insbesondere Zuglitze, Zugstangen oder dergleichen an dem Anker (100), insbesondere zwischen dem Festanker (2100) und einem Spannanker (2300), wobei der Anker (100) einen mehrteiligen Ankerkopf (1) hat, der aufweist:
- eine Ankerplatte in Form einer Lochscheibe (10) mit einer Durchführung (11) zur separaten Durchführung eines Zugstranges (2), wobei die Durchführung (11) eine von einer Anzahl von Durchführungen ist und der Zugstrang (2) einer von einer Anzahl von Zugsträngen ist,
- eine einseits der Lochscheibe (10) angeordnete Zwischenscheibe (20) mit einer weiteren Durchführung (21) zur separaten Durchführung des Zugstranges (2), wobei die weitere Durchführung (21) eine von einer Anzahl von weiteren Durchführungen in der Zwischenscheibe (20) ist und der Zugstrang (2) der eine von der Anzahl von Zugsträngen ist, wobei
der Ankerkopf (1) weiter aufweist:
- eine anderseits der Lochscheibe (10) angeordnete Sicherungsscheibe (30), wobei die Sicherungsscheibe (30) noch eine weitere Durchführung zur separaten Durchführung des Zugstranges (2) aufweist, wobei die noch weitere Durchführung eine von einer Anzahl von noch weiteren Durchführungen in der Sicherungsscheibe (30) ist und der Zugstrang (2) der eine Anzahl von Zugsträngen ist,
- die Zwischenscheibe (20) als Übergangsplatte ausgebildet ist, die wenigstens in der weiteren Durchführung (21) eine Sicherungshülse (120) trägt, welche ausgebildet ist, den Zugstrang (2) unter Zug selbsttätig zu verankern,
- wobei das Verfahren die Schritte aufweist:
- Einbringen eines Zugstranges (2) wenigstens in die Durchführung (11) der Lochscheibe (10) und die weitere Durchführung (21) der Übergangsplatte (20),
- unter Zug stellen des Zugstranges (2),
- selbsttätiges Verankern des Zugstranges (2) in der Lochscheibe (10) und der Übergangsplatte (20).

18. Verfahren nach Anspruch 17 **dadurch gekennzeichnet, dass** der Zugstrang (2) in der Lochscheibe (10) und in der Übergangsplatte (20) fest umgeben und fest geklemmt wird.

19. Verfahren nach Anspruch 17 oder 18 **dadurch gekennzeichnet, dass** wenigstens ein erster der Zugstränge (2200) mit einem unterscheidenden Erkennungsmerkmal versehen wird, das wenigstens den ersten Zugstrang unterscheidbar von einem zweiten Zugstrang kennzeichnet.

## Claims

1. Anchor (100), more particularly a fixed anchor (2100), for a tensioning device (2000) designed for attachment on a construction for holding tensile cords (2), such as wires, rods, more particularly tensile wires, tension rods, or the like on the anchor (100), with a multi-part anchor head (1), wherein the anchor head (1) has:
- an anchor plate in the form of a perforated disc (10) with a feed-through (11) for separately guiding a tensile cord (2), wherein the feed-through (11) is one of a number of feed-throughs (11) and the tensile cord (2) is one of a number of tensile cords,
- an intermediate disc mounted on one side of the perforated disc (10) and having a further feed-through for separately guiding the tensile cord (2), wherein the further feed-through is one of a number of further feed-throughs in the intermediate disc and the tensile cord (2) is the one of the number of tensile cords, wherein
- the intermediate disc (20) is formed as a transition plate (20) which supports at least in the further feed-through (21) a tension fastening element, which is designed to anchor the tensile cord (2) automatically under tension
**characterized in that** anchor head (1) further has:
a security disc (30) arranged on the other side of the perforated disc (10) wherein the security disc (30) has also a further feed-through for separately guiding through the tensile cord (2), wherein the additional further feed-through is one of a number of additional further feed-throughs in the security disc (30) and the tensile cord (2) is the one of the number of tensile cords.

2. Anchor (100) according to Claim 1 **characterized in that** the perforated disc (10) supports in the feed-through (11) a ring-shaped anchor body (110) which is designed to anchor a tensile cord (2) on the perforated disc (10).

3. Anchor (100) according to one of the preceding claims **characterized in that** the anchor head (1) has in addition:
a setting ring (3) which is mounted on one side of the intermediate disc (20).

4. Anchor (100) according to Claim 3 **characterized in that** the setting ring (3) has a stop for the intermediate disc (20) and/or is designed for embedding in a foundation base (1300), and/or has an inner area common to the number of tensile cords (2) so that the number of tensile cords can be feed-throughed together through the inner area.

5. Anchor (100) according to one of the preceding claims **characterized in that** the anchor head (1) further has:
a cover arranged on the other side of the perforated disc (10) and engaging over same, wherein a cover engages over the security disc (30) and/or the perforated disc (10) and/or the intermediate disc (20).

6. Anchor (100) according to Claim 5 **characterized in that** the cover is formed as a system comprising a cover hood (60) closed on the other side, and a cover cap (50), wherein the cover hood (60) has a protective cover (61) for all and the cover cap (50) has a protective connector (52) for one tensile cord (2).

7. Anchor (100) according to one of the preceding claims **characterized in that** the number of feed-throughs (11) and/or the further feed-throughs (21) and/or the additional further feed-throughs in a feed-through area (13) off-set relative to a stop area (12) are arranged centro-symmetrically around an axis of the intermediate disc (20) and/or perforated disc (10) and/or security disc (30), wherein the stop area (12) is a centro-symmetrical ring area.

8. Anchor (100) according to Claim 7 **characterized in that** the off-set feed-through area (23) of the transition plate (20) has a counter-sunk area (23) sunk centro-symmetrically on an upper side, and an insert area raised centro-symmetrically on a lower side.

9. Anchor (100) according to one of Claims 1 to 8 **characterized in that**
- the counter-sunk area (23) of the transition plate (20) is designed for receiving a feed-through area (13) of the perforated disc (10) and
- the insert area of the transition plate (20) is designed for insertion in a setting ring (3) and a stop area (12) arranged on one side is designed for stopping against the setting ring (3) and
- a stop area (22) arranged on the other side of the transition plate (20) is designed for stopping against the perforated disc (10).

10. Anchor (100) according to one of the preceding claims **characterized in that** a sunk distance of the counter-sunk area (23) corresponds approximately to the indent measurement of the security sleeve (120) wherein the indent measurement corresponds to the distance between a tension-free and a tension-loaded position of the security sleeve (120).

11. Anchor (100) according to one of the preceding claims **characterized in that** a feed-through (21) of the transition plate (20) has
- a smooth or structured inner sleeve side which is thread-free and/or
- a first conical section and/or a second cylindrical section of the inner sleeve side of the feed-through (21).

12. Anchor (100) according to one of the preceding claims **characterized in that** the tension fastening element is formed as a ring-shaped anchor body (110) and/or a security sleeve (120) is formed in the shape of a ring wedge wherein
- the anchor body (110) has a number of expansion slits and/or a plurality of symmetrically arranged expansion slits and/or
- the security sleeve (120) has a clamping slit (130) and/or one single clamping slit (130) which extends continuously right along the length of the sleeve and/or
- the security sleeve (120) and/or the anchor body (110) has/have a conical outer sleeve side (121).

13. Anchor (100) according to one of the preceding claims **characterized in that** the security sleeve (120) and/or the anchor body (110) has a cylindrical toothed inner sleeve side.

14. Anchor (100) according to claim 13 **characterized in that** the teething (180) of an inner sleeve side is directed asymmetrically to a first side or an upper side, of the anchor (100).

15. Combination of a tensioning device (2000) and an anchor (100) according to one of the claims 1 to 14, wherein the tensioning device (2000) is designed for attachment on a construction and for holding tensile cords (2200), such as tensile wires, tension rods or the like, on an anchor (100) with a fixed anchor (2100) and a tension anchor (2300) wherein tensile cords (2200), such as tensile wires, tension rods or the like are held between the fixed anchor (2100) and the tension anchor (2300), wherein each of the anchors (100) has a multi-part anchor head (1), wherein the anchor head (1) of the fixed anchor (2100) is designed for fixing the tensile cords (2200) before and after tensioning and the anchor head (1) of the tension anchor (2300) is designed for tensioning and then fixing the tensile cords (2200) .

16. Wind energy plant (1000) with a nacelle (1002) on which a wind-drivable rotor (1003) is coupled with drive via a rotor hub (1005) on a generator, wherein the nacelle (1002) sits on a tower (1001) with a number of tower segments (1100, 1200, 1300) of which at least one has an anchor (100) according to one of the preceding claims, wherein at least two or all tower segments (1100, 1200, 1300) of the tower (1001), are held under tension against one another.

17. Method for tensioning tensile cords (2) on an anchor (100) according to one of the claims 1 to 14, more particularly a fixed anchor (2100), for a tensioning device (2000) designed for attachment on a construction, for holding tensile cords (2200), such as wires, rods, more particularly tensile wires, tension rods or the like on the anchor (100), more particularly between the fixed anchor (2100) and a tension anchor (2300), wherein the anchor (100) has a multi-part anchor head (1), which has:
- an anchor plate in the form of a perforated disc (10) with a feed-through (11) for separately guiding a tensile cord (2), wherein the feed-through (11) is one of a number of feed-throughs and the tensile cord (2) is one of a number of tensile cords,
- an intermediate disc (20) mounted on one side of the perforated disc (10), with a further feed-through (21) for separately guiding the tensile cord (2), wherein the further feed-through (21) is one of a number of further feed-throughs in the intermediate disc (20) and the tensile cord (2) is the one of the number of tensile cords,
wherein the anchor head (1) has in addition:
- a security disc (30) arranged on the other side of the perforated disc (10) wherein the security disc (30) has also a further feed-through for separately guiding through the tensile cord (2), wherein the additional further feed-through is one of a number of additional further feed-throughs in the security disc (30) and the tensile cord (2) is the one of the number of tensile cords,
- the intermediate disc (20) is designed as a transition plate which supports at least in the further feed-through (21) a security sleeve (120) which is designed to automatically anchor the tensile cord (2) under tension,
- wherein the method has the steps:
- introducing a tensile cord (2) at least into the feed-through (11) of the perforated disc (10) and the further feed-through (21) of the transition plate (20),
- setting the tensile cord (2) under tension,
- automatically anchoring the tensile cord (2) in the perforated disc (10) and the transition plate (20).

18. Method according to Claim 17 **characterized in that** the tensile cord (2) is firmly encased and fixedly clamped in the perforated disc (10) and in the transition plate (20).

19. Method according to Claim 17 or 18 **characterized in that** at least a first of the tensile cords (2200) is provided with a differentiating distinguishing feature which marks out at least the first tensile cord differently from a second tensile cord.

## Revendications

1. Boulon d'ancrage (100), en particulier boulon d'ancrage fixe (2100), pour un dispositif tendeur (2000) réalisé pour une mise en place sur un ouvrage pour maintenir des câbles de traction (2) tels des torons, des barres, en particulier des torons de traction, des barres de traction ou similaires sur le boulon d'ancrage (100), avec une tête de boulon d'ancrage en plusieurs parties (1), dans lequel la tête de boulon d'ancrage (1) présente :
- une plaque d'ancrage sous la forme d'un disque perforé (10) avec un passage (11) pour le passage séparé d'un câble de traction (2), dans lequel le passage (11) est l'un parmi un nombre de passages (11) et le câble de traction (2), l'un parmi un nombre de câbles de traction,
- un disque intermédiaire (20) disposé d'un côté du disque perforé (10) avec un passage supplémentaire pour le passage séparé du câble de traction (2), dans lequel le passage supplémentaire est l'un parmi un nombre de passages supplémentaires dans le disque intermédiaire et le câble de traction (2), l'un parmi le nombre de câbles de traction, dans lequel
- le disque intermédiaire est réalisé en tant que plaque de transition (20) laquelle porte, au moins dans le passage supplémentaire (21), un élément de fixation sous tension qui est réalisé pour ancrer automatiquement le câble de traction (2) sous tension, **caractérisé en ce que** la tête de boulon d'ancrage (1) présente en outre :
- un disque de sécurité (30) disposé de l'autre côté du disque perforé (10), dans lequel le disque de sécurité (30) présente un passage encore supplémentaire pour le passage séparé du câble de traction (2), dans lequel le passage encore supplémentaire est l'un parmi un nombre de passages encore supplémentaires dans le disque de sécurité (30) et le câble de traction (2), l'un parmi le nombre de câbles de traction.

2. Boulon d'ancrage (100) selon la revendication 1, **caractérisé en ce que**, dans le passage (11), le disque perforé (10) porte un corps d'ancrage (110) annulaire qui est réalisé pour ancrer un câble de traction (2) au niveau du disque perforé (10).

3. Boulon d'ancrage (100) selon l'une des revendications précédentes, **caractérisé en ce que** la tête de boulon d'ancrage (1) présente en outre :
une bague de pose (3) disposée d'un côté du disque intermédiaire (20).

4. Boulon d'ancrage (100) selon la revendication 3, **caractérisé en ce que** la bague de pose (3) présente une butée pour le disque intermédiaire (20) et/ou est réalisée pour l'incorporation dans une fondation (1300), et/ou présente une zone intérieure commune au nombre de câbles de traction (2) de telle manière que le nombre de câbles de traction peuvent être guidés ensemble à travers la zone intérieure.

5. Boulon d'ancrage (100) selon l'une des revendications précédentes, **caractérisé en ce que** la tête de boulon d'ancrage (1) présente en outre :
un recouvrement disposé de l'autre côté du disque perforé (10) et enjambant celui-ci, dans lequel un recouvrement enjambe le disque de sécurité (30) et/ou le disque perforé (10) et/ou le disque intermédiaire (20) .

6. Boulon d'ancrage (100) selon la revendication 5, **caractérisé en ce que** le recouvrement est réalisé en tant que système formé par une calotte de couverture (60) fermée de l'autre côté et un capuchon de couverture (50), dans lequel la calotte de couverture (60) possède une couverture de protection (61) pour tous les câbles de traction (2) et le capuchon de couverture (50), un manchon de protection (52) pour l'un de ceux-ci.

7. Boulon d'ancrage (100) selon l'une des revendications précédentes, **caractérisé en ce que** le nombre de passages (11) et/ou les passages supplémentaires (21) et/ou des passages encore supplémentaires est disposé, dans une zone de passage (13) tassée par rapport à une zone de butée (12), de façon centrosymétrique autour d'un axe du disque intermédiaire (20) et/ou du disque perforé (10) et/ou du disque de sécurité (30), dans lequel la zone de butée (12) est une zone annulaire centrosymétrique.

8. Boulon d'ancrage (100) selon la revendication 7, **caractérisé en ce que** la zone de passage (23) tassée de la plaque de transition (20) présente une zone de dépression (23) abaissée de façon centrosymétrique sur un dessus et une zone d'insertion surélevée de façon centrosymétrique sur un dessous.

9. Boulon d'ancrage (100) selon l'une des revendications 1 à 8, **caractérisé en ce que**
- la zone de dépression (23) de la plaque de transition (20) est réalisée pour la réception d'une zone de passage (13) du disque perforé (10) et
- la zone d'insertion de la plaque de transition (20) est réalisée pour l'insertion dans une bague de pose (3), et une zone de butée (12) disposée d'un côté est réalisée pour la butée contre la bague de pose (3) et
- une zone de butée (22) disposée de l'autre côté de la plaque de transition (20), pour la butée contre le disque perforé (10).

10. Boulon d'ancrage (100) selon l'une des revendications précédentes, **caractérisé en ce qu'**un intervalle de dépression de la zone de dépression (23) correspond à peu près à un degré de rentrage de la douille de sécurité (120), dans lequel le degré de rentrage correspond à la distance entre une position libre de tension et une position sous tension de la douille de sécurité (120).

11. Boulon d'ancrage (100) selon l'une des revendications précédentes, **caractérisé en ce qu'**un passage (21) de la plaque de transition (20)
- présente un côté d'enveloppe intérieure lisse ou structuré, lequel est sans filetage, et/ou
- possède une première partie conique et/ou une deuxième partie cylindrique du côté d'enveloppe intérieure du passage (21).

12. Boulon d'ancrage (100) selon l'une des revendications précédentes, **caractérisé en ce que** l'élément de fixation sous tension est réalisé en tant que corps d'ancrage (110) annulaire et/ou en tant qu'une douille de sécurité (120) sous la forme d'une clavette annulaire, dans lequel
- le corps d'ancrage (110) présente un nombre de fentes de dilatation et/ou une pluralité de fentes de dilatation disposées symétriquement, et/ou
- la douille de sécurité (120) présente une fente de serrage (130) et/ou une seule fente de serrage (130) s'étendant sans interruption le long de la longueur de douille, et/ou
- la douille de sécurité (120) et/ou le corps d'ancrage (110) possède un côté d'enveloppe extérieure (121) conique.

13. Boulon d'ancrage (100) selon l'une des revendications précédentes, **caractérisé en ce que** la douille de sécurité (120) et/ou le corps d'ancrage (110) possède un côté d'enveloppe intérieure cylindrique dentée.

14. Boulon d'ancrage (100) selon la revendication 13, **caractérisé en ce qu'**une denture (180) d'un côté d'enveloppe intérieure est orientée asymétriquement par rapport à un premier côté ou côté supérieur du boulon d'ancrage (100).

15. Combinaison entre un dispositif tendeur (2000) et un boulon d'ancrage (100) selon l'une des revendications 1 à 14, dans lequel le dispositif tendeur (2000) est réalisé pour la mise en place sur un ouvrage et pour le maintien de câbles de traction (2200) tels des torons de traction, des barres de traction ou similaires sur le boulon d'ancrage (100) avec un boulon d'ancrage fixe (2100) et une ancre de serrage (2300), dans lequel des câbles de traction (2200) tels que des torons de traction, des barres de traction ou similaires sont maintenus entre le boulon d'ancrage fixe (2100) et l'ancre de serrage (2300), dans lequel chacun des boulons d'ancrage (100) présente une tête d'ancrage en plusieurs parties (1), dans lequel la tête d'ancrage (1) du boulon d'ancrage fixe (2100) est réalisée pour la fixation des câbles de traction (2200) avant et après un serrage et la tête de boulon d'ancrage (1) de l'ancre de serrage (2300), pour le serrage et la fixation qui s'en suit des câbles de traction (2200) .

16. Eolienne (1000) avec une nacelle (1002) à laquelle un rotor (1003) pouvant être entraîné par le vent est couplé par entraînement via un moyeu de rotor (1005) à un générateur, dans lequel la nacelle (1002) est posée sur un mât (1001) avec un nombre de segments de mât (1100, 1200, 1300) dont au moins un présente un boulon d'ancrage (100) selon l'une des revendications précédentes, dans lequel au moins deux ou l'ensemble des segments de mât (1100, 1200, 1300) du mât (1001) sont maintenus ensemble sous tension.

17. Procédé pour la mise sous tension de câbles de traction (2) au niveau d'un boulon d'ancrage (100) selon l'une des revendications 1 à 14, en particulier d'un boulon d'ancrage fixe (2100), pour un dispositif tendeur (2000) réalisé pour la mise en place au niveau d'un ouvrage pour le maintien de câbles de traction (2200) tels que des torons, des barres, en particulier des torons de traction, des barres de traction ou similaires sur le boulon d'ancrage (100), en particulier entre le boulon d'ancrage fixe (2100) et une ancre de serrage (2300), dans lequel le boulon d'ancrage (100) possède une tête de boulon d'ancrage en plusieurs parties (1), laquelle présente :
- une plaque d'ancrage sous la forme d'un disque perforé (10) avec un passage (11) pour le passage séparé d'un câble de traction (2), dans lequel le passage (11) est l'un parmi un nombre de passages (11) et le câble de traction (2), l'un parmi un nombre de câbles de traction,
- un disque intermédiaire (20) disposé d'un côté du disque perforé (10) avec un passage supplémentaire (21) pour le passage séparé du câble de traction (2), dans lequel le passage supplémentaire (21) est l'un parmi un nombre de passages supplémentaires dans le disque intermédiaire (20) et le câble de traction (2), l'un parmi le nombre de câbles de traction, dans lequel la tête d'ancrage (1) présente en outre :
- un disque de sécurité (30) disposé de l'autre côté du disque perforé (10), dans lequel le disque de sécurité (30) présente un passage encore supplémentaire pour le passage séparé du câble de traction (2), dans lequel le passage encore supplémentaire est l'un parmi un nombre de passages encore supplémentaires dans le disque de sécurité (30) et le câble de traction (2), l'un parmi le nombre de câbles de traction,
- le disque intermédiaire (20) est réalisé en tant que plaque de transition laquelle porte, au moins dans le passage supplémentaire (21), une douille de sécurité (120) réalisée pour ancrer automatiquement sous tension le câble de traction (2),
- dans lequel le procédé présente les étapes suivantes :
- l'introduction d'un câble de traction (2) au moins dans le passage (11) du disque perforé (10) et le passage supplémentaire (21) de la plaque de transition (20),
- la mise sous tension du câble de traction (2),
- l'ancrage automatique du câble de traction (2) dans le disque perforé (10) et la plaque de transition (20) .

18. Procédé selon la revendication 17, **caractérisé en ce que** le câble de traction (2) est entouré de manière serrée et fixé de manière serrée dans le disque perforé (10) et dans la plaque de transition (20).

19. Procédé selon la revendication 17 ou 18, **caractérisé en ce qu'**au moins un premier des câbles de traction (2200) est doté d'une marque d'identification distinctive qui marque de manière distinctive au moins le premier câble de traction par rapport à un deuxième câble de traction.
